# EUROPÄISCHE PATENTSCHRIFT

(11) **EP 2 329 966 B1**
(45) Veröffentlichungstag und Bekanntmachung des Hinweises auf die Patenterteilung: **06.03.2013**
(21) Anmeldenummer: 10183116.2
(22) Anmeldetag: 30.09.2010
(51) Int. Cl.: B60C 11/13

(54) **Laufflächenprofil eines Fahrzeugreifens**
Bearing surface profile of a vehicle tyre
Profil de surface de roulement d'un pneu de véhicule

(30) Priorität: 03.12.2009 DE 102009044749
(43) Veröffentlichungstag der Anmeldung: 08.06.2011
(73) Patentinhaber: Continental Reifen Deutschland GmbH, 30165 Hannover (DE)
(72) Erfinder: Fischer, Markus, 30823, Garbsen (DE); Behr, Ulrich, 30169, Hannover (DE)
(74) Vertreter: Finger, Karsten

(56) Entgegenhaltungen:
- EP-A1- 2 072 288
- EP-A1- 2 119 574
- JP-A- 60 203 505
- JP-A- 2009 214 759

## Beschreibung

Die Erfindung betrifft ein Laufflächenprofil eines Fahrzeugreifens - insbesondere eines PKW-Fahrzeugluftreifens - mit wenigstens einer in Umfangsrichtung des Fahrzeugreifens gerichteten, über den Umfang des Fahrzeugreifens umlaufenden Umfangsrille die mit zwei Rillenwänden axial nach beiden Seiten jeweils ein über den Umfang des Fahrzeugreifens erstrecktes Profilelement begrenzt, wobei die Umfangsrille mit einem über den Umfang des Fahrzeugreifens umlaufenden Rillengrund und den beiderseits des Rillengrundes aus dem Rillengrund nach radial außen erstreckten, die Umfangsrille in axialer Richtung begrenzenden Rillenwänden ausgebildet ist.

"Profilelement" meint beispielsweise einen Profilblock oder ein Profilband.

Üblicherweise werden bei derartigen Fahrzeugreifen die Umfangsrillen in einer senkrecht zur Erstreckungsrichtung des Rillengrundes ausgebildeten Schnittebene jeweils mit von radial innen nach radial außen v-förmig erweitertem Rillenquerschnitt mit ausgebildet, wobei die beiden Rillenwände einen gleichen Neigungswinkel zur Radialen aufweisen. Der Übergang zwischen Rillengrund und Neigungswinkeln ist ebenfalls an beiden Rillenwänden mit einem gleich großen Krümmungsradius ausgebildet.

Derartige Fahrzeugreifen unterliegen besonders im Hochgeschwindigkeitsbereich dem Zielkonflikt aus guten Handlingeigenschaften einerseits und guten Aquaplaningeigenschaften andererseits. Zur Erzielung guter Handlingeigenschaften ist eine hohe Quersteifigkeit der Profilelemente um ihre Umfangsrichtung wünschenswert. Hierzu ist es wünschenswert die Neigungswinkel der Rillenwände von Umfangsrillen möglichst groß auszubilden. Zur Erzielung guter Aquaplaningeigenschaften ist es wünschenswert, den offenen Querschnitt einer Umfangsrille möglichst groß auszubilden. Hierzu ist es wünschenswert die Neigungswinkel der Rillenwände zur Radialen möglichst klein auszubilden. Aufgrund dieser sich widersprechenden Anforderungen wird häufig ein Kompromiss mit Neigungswinkeln gewählt, die reduzierte Handlingeigenschaften mit reduzierten Aquaplaningeigenschaften verbindet. Je nach Anforderungen werden die beiden Neigungswinkel zugunsten verbesserter Handlingeigenschaften unter Inkaufnahme reduzierter Aquaplaningeigenschaften größer oder aber zugunsten verbesserter Aquaplaningeigenschaften unter Inkaufnahme reduzierter Handlingeigenschaften kleiner gewählt.

Es ist - beispielsweise aus der EP 0 681 930 B1 - bekannt, die beiden Rillenwände zur Erhöhung der Traktion auf Schnee mit unterschiedlichen Neigungswinkeln gegenüber der Radialen auszubilden, wobei der Neigungswinkel der jeweils zur Äquatorebene des Reifens weisenden Seitenwand einer Umfangsrille jeweils kleiner gewählt ist als der Neigungswinkel der von der Äquatorebene wegweisenden Seite. Die Übergänge zwischen Rillengrund und Rillenwänden sind - wie üblich - jeweils gleich ausgebildet.

Aus der gattungsgemäßen DE-A-102008023977 der Anmelderin ist es zur Lösung des vorgenannten Zielkonfliktes ein Laufflächenprofil bekannt, welches wenigstens eine, in Umfangsrichtung des Fahrzeugreifens gerichtete, über den Umfang des Fahrzeugreifens umlaufende Umfangsrille aufweist, die mit zwei Rillenwänden axial nach beiden Seiten jeweils ein über den Umfang des Fahrzeugreifens erstrecktes Profilelement begrenzt, wobei die Umfangsrille mit einem Rillengrund und den beiderseits des Rillengrundes aus dem Rillengrund nach radial außen erstreckten, die Umfangsrille in axialer Richtung begrenzenden Rillenwänden ausgebildet ist, wobei längs der Erstreckungsrichtung der Umfangsrille jeweils in einer senkrecht zur Erstreckungsrichtung des Rillengrundes ausgebildeten Schnittebene die erste Rillenwand von radial innen nach radial außen von der Umfangsrille wegweisend geneigt mit einem ersten Schnittwinkel γ zur Radialen R im Reifen und die zweite Rillenwand von radial innen nach radial außen von der Umfangsrille wegweisend geneigt mit einem radial inneren Erstreckungsbereich mit einem zweiten Schnittwinkel β zur Radialen R im Reifen und einem radial äußeren Erstreckungsbereich mit einem dritten Schnittwinkel α zur Radialen R im Reifen und der Übergang zwischen erster Rillenwand und Rillengrund mit einem Krümmungsradius R₁ ausgebildet ist, wobei der zweite Schnittwinkel β größer als der dritte Schnittwinkel α und der dritte Schnittwinkel α größer als der erste Schnittwinkel γ und der Krümmungsradius R₁ mit 2mm≤ R₁≤ 6mm - insbesondere mit 3mm≤ R₁≤ 4mm - ausgebildet ist.

Es besteht jedoch weiterhin Bedarf, die Handlingeigenschaften zu verbessern.

Es ist die Aufgabe der vorliegenden Erfindung, mit einfachen Mitteln ein Laufflächenprofil zu schaffen, das bei guten Aquaplaningeigenschaften verbesserte Handlingeigenschaften aufweist.

Die Aufgabe wird erfindungsgemäß dadurch gelöst, dass an der Laufstreifenoberfläche der ersten Rillenwand durch Anfasen eine Schrägfläche an dem die Umfangsrille begrenzenden Profilelement ausgebildet ist.

Durch diese Schrägfläche ist erreicht, dass ein beim Handling auftretender nachteiliger Einrolleffekt derjenigen Kante, welche zwischen erster, steiler Rillenwand und angrenzender Laufstreifenoberfläche gebildet wird, vermieden ist. Hierdurch ist die Kontaktfläche zwischen Reifen und Fahrbahnoberfläche vorteilhaft verbessert, da diese durch den nun nicht mehr auftretenden Einrolleffekt nicht verkleinert wird. Das Einrollen der Kante erfolgte in axialer Richtung oberhalb des/ auf das an die Umfangsrille angrenzende(n) Profilelement(es) und verringerte nachteilig die Kontaktfläche zwischen Fahrbahnoberfläche und Laufstreifen.

Besonders vorteilhaft ist die Ausbildung eines Fahrzeugluftreifens gemäß den Merkmalen von Anspruch 2, wobei die zweite Rillenwand die Umfangsrille zu der als zur Fahrzeugaußenseite (OU) hinweisend ausgebildeten Schulter und die erste Rillenwand die Umfangsrille zu der als zur Fahrzeuginnenseite (IN) hinweisend ausgebildeten Schulter hin begrenzt. Dies ermöglicht eine für Kurvenfahrten besonders günstige Quersteifigkeit der Profilelemente und das Einrollen der Kante ist durch die Schrägfläche in Richtung zur Fahrzeuginnenseite, welche besonders zum Einrollen geneigt hat, vermieden.

Besonders vorteilhaft ist die Ausbildung eines Fahrzeugluftreifens gemäß den Merkmalen von Anspruch 3, wobei die Schrägfläche höchstens bis auf eine Tiefe (t1) von 30% der Profiltiefe (PT) reicht.

Besonders vorteilhaft ist die Ausbildung eines Fahrzeugluftreifens gemäß den Merkmalen von Anspruch 4, wobei die Begrenzungskanten der Schrägfläche an der Laufflächenoberfläche im Wesentlichen in Umfangsrichtung verlaufen.

Besonders vorteilhaft ist die Ausbildung eines Fahrzeugluftreifens gemäß den Merkmalen von Anspruch 5, wobei die Schrägfläche einen Winkel ε zur axialen Richtung von 20° bis 70°, vorzugsweise von 45° einnimmt.

Besonders vorteilhaft ist die Ausbildung eines Fahrzeugluftreifens gemäß den Merkmalen von Anspruch 6, wobei das Maß der radialen Erstreckung des radial äußeren Erstreckungsbereichs der zweiten Rillenwand mit h₁ und das Maß der radialen Erstreckung des radial inneren Erstreckungsbereichs der zweiten Rillenwand mit h₂ ausgebildet ist, wobei für das Verhältnis von h₂ zu h₁ gilt: 1≥(h₂/h₁)≥0,1, insbesondere 0,5≥(h₂/h₁)≥0,25. Dies ermöglicht eine Optimierung der Querabstützung der Profilrippe bzw. der Profilblockreihe bei gleichzeitig hohem Negativanteil des Profils.

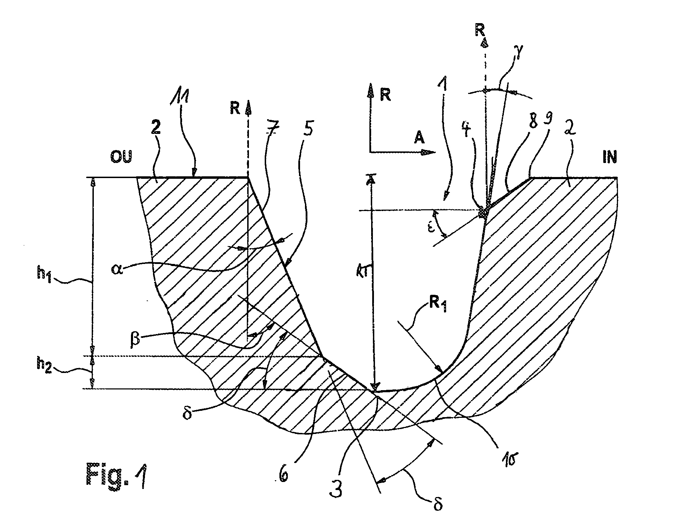

Besonders vorteilhaft ist die Ausbildung eines Fahrzeugluftreifens gemäß den Merkmalen von Anspruch 7, wobei der erste Schnittwinkel γ mit 0°≤ γ≤ 20° - insbesondere mit 3°≤ γ≤ 8°-, der zweite Schnittwinkel β mit 30°≤ β ≤ 45° - insbesondere mit 38°≤ β ≤ 42°- und der dritte Schnittwinkel α mit 1°≤ α ≤ 25° - insbesondere mit 8°≤ α ≤ 15°- ausgebildet ist. Dies ermöglicht eine Optimierung der Querabstützung der Profilrippe bzw. der Profilblockreihe bei gleichzeitig hohem Negativanteil des Profils. Die Erfindung wird nun anhand der nachstehend beschriebenen Figur, die ein schematisches Ausführungsbeispiel darstellt, näher erläutert. Die Fig.1 zeigt einen Radialschnitt durch die Umfangsrille eines erfindungsgemäßen asymmetrischen Laufflächenprofils.

In Fig. 1 ist die axiale Richtung A sowie die radiale Richtung R des Fahrzeugluftreifens mit Pfeilen gekennzeichnet.

Die Umfangsrille 1 ist mit einem Rillengrund 3, einer ersten zur Fahrzeuginnenseite (IN) weisenden ersten Rillenwand 4 und einer am Fahrzeug zur axialen Außenseite (OU) weisenden zweiten Rillenwand 5 ausgebildet.

Die erste Rillenwand 4 und die zweite Rillenwand 5 erstrecken sich dabei von radial innen nach radial außen mit einer jeweils von der axialen Mitte der Umfangsrille 1 axial wegweisenden Neigung. Die erste Rillenwand 4 schließt einen Neigungswinkel γ zur radialen R ein. Ausgehend vom Rillengrund 3 nach radial außen ist die zweite Rillenwand 5 aus einem radial inneren Erstreckungsbereich 6 und aus einem radial äußeren Erstreckungsbereich 7, der sich bis zur Reifenperipherie 11 erstreckt, ausgebildet. Der radial innere Erstreckungsbereich 6 erstreckt sich dabei über eine radiale Erstreckungshöhe h₂ und schließt einen Neigungswinkel β zur radialen R ein. An den radial inneren Erstreckungsbereich 6 schließt sich der radial äußere Erstreckungsbereich 7 an, der sich über eine radiale Erstreckungshöhe h₁ in radialer Richtung erstreckt und einen Neigungswinkel α zur radialen R einschließt. Für die Neigungswinkel α,β,γ gilt: β > α > γ.

In einem ersten Übergangsbereich 10 zwischen erster Rillenwand 4 und Rillengrund 3 ist die Querschnittskontur mit einer Krümmung mit einem Krümmungsradius R₁ um einen vom Rillengrund nach radial außen wegweisenden Mittelpunkt gekrümmt ausgebildet.

Die Winkel α, β und γ sind beispielsweise so gewählt, dass 0°≤ γ ≤ 20°, 30°≤ β ≤ 45° und 1°≤ α ≤ 25° mit β > α > γ. Vorteilhafterweise sind die Winkel α, β und γ beispielsweise so gewählt, dass 3°≤ γ ≤ 8°, 38°≤ β ≤ 42° und 8°≤ α ≤ 15° mit β > α > γ. Im dargestellten Beispiel von Fig. 2 ist α = 10°, β = 40° und γ =5°.

Der Krümmungsradius R₁ ist so gewählt, dass für R₁ gilt: 2mm≤ R₁≤ 6mm. Besonders vorteilhaft ist R₁ so gewählt, dass 3mm≤ R₁≤ 4mm. Im dargestellten Beispiel von Fig. 2 ist R₁=3mm gewählt.

Das Maß h₁ der radialen Erstreckung des radial äußeren Erstreckungsbereichs 7 der zweiten Rillenwand 5 und das Maß h₂ der radialen Erstreckung des radial inneren Erstreckungsbereichs 6 der zweiten Rillenwand 5 sind so gewählt, dass für das Verhältnis von h₂ zu h₁ gilt: 1≥(h₂/h₁)≥0,1. Vorteilhafterweise ist das Maß h₁ der radialen Erstreckung des radial äußeren Erstreckungsbereichs 7 der zweiten Rillenwand 5 und das Maß h₂ der radialen Erstreckung des radial inneren Erstreckungsbereichs 6 der zweiten Rillenwand 5 sind so gewählt, dass für das Verhältnis von h₂ zu h₁ gilt: 0,5≥(h₁/h₂)≥0,25. Im dargestellten Beispiel von Fig. 2 ist das Verhältnis von h₂ zu h₁ so gewählt, dass (h₂/h₁)=0,25.

In dem in Fig. 1 dargestellten Ausführungsbeispiel ist an der ersten Rillenwand 4, welche nach axial innen zur Fahrzeugmitte (IN) weist, durch Anfasen eine Schrägfläche 8 an dem die Umfangsrille 1 begrenzenden Profilelement 2 ausgebildet. Die Begrenzungskante 9 der Schrägfläche 8 verläuft an der Laufflächenperipherie 11 im Wesentlichen in Umfangsrichtung (in die Blattebene hinein). Die Schrägfläche 8 nimmt einen Winkel ε zur axialen Richtung von 45° ein. Die Schrägfläche 8 reicht maximal bis zu 20% der Rillentiefe RT in diese hinein.

Wie in Figur 1 dargestellt, schließt die Verlängerung des radial äußeren Erstreckungsbereichs 7 der zweiten Rillenwand 5 nach radial innen einen Winkel δ mit der in der Schnittebene dargestellten Konturlinie des radial inneren Erstreckungsbereichs 6 der zweiten Rillenwand 5 ein. Den gleichen Winkel δ schließt die in der Schnittebene von Figur 1 dargestellte Konturlinie des radial inneren Erstreckungsbereichs 6 der zweiten Rillenwand 5 mit der axialen Richtung A und mit der Verlängerung der Konturlinie des Rillengrundes 3 in Richtung der zweiten Rillenwand 5 ein.

### Bezugszeichenliste

### (Teil der Beschreibung)

- 1: Umfangsrille
- 2: Profilelement
- 3: Rillengrund
- 4: erste Rillenwand (zur Fahrzeuginnenseite weisend)
- 5: zweite Rillenwand (zur Fahrzeugaußenseite weisend)
- 6: radial innerer Erstreckungsbereich
- 7: radial äußerer Erstreckungsbereich
- 8: Schrägfläche
- 9: Kante
- 10: Übergangsbereich
- 11: Reifenperipherie

- IN: zur Fahrzeuginnenseite weisend
- OU: zur Fahrzeugaußenseite weisend

## Patentansprüche

1. Laufflächenprofil eines Fahrzeugreifens mit wenigstens einer, in Umfangsrichtung des Fahrzeugreifens gerichteten, über den Umfang des Fahrzeugreifens umlaufenden Umfangsrille (1), die mit zwei Rillenwänden (4,5) axial nach beiden Seiten jeweils ein über den Umfang des Fahrzeugreifens erstrecktes Profilelement begrenzt, wobei die Umfangsrille (1) mit einem Rillengrund (3) und den beiderseits des Rillengrundes aus dem Rillengrund (3) nach radial außen erstreckten, die Umfangsrille (1) in axialer Richtung begrenzenden Rillenwänden (4,5) ausgebildet ist,
wobei längs der Erstreckungsrichtung der Umfangsrille (1) jeweils in einer senkrecht zur Erstreckungsrichtung des Rillengrundes (3) ausgebildeten Schnittebene die erste Rillenwand (4) von radial innen nach radial außen von der Umfangsrille wegweisend geneigt mit einem ersten Schnittwinkel γ zur Radialen R im Reifen und die zweite Rillenwand (5) von radial innen nach radial außen von der Umfangsrille wegweisend geneigt mit einem radial inneren Erstreckungsbereich (6) mit einem zweiten Schnittwinkel β zur Radialen R im Reifen und einem radial äußeren Erstreckungsbereich (7) mit einem dritten Schnittwinkel α zur Radialen R im Reifen und der Übergang (10) zwischen erster Rillenwand (4) und Rillengrund (3) mit einem Krümmungsradius R₁ ausgebildet ist,
wobei der zweite Schnittwinkel β größer als der dritte Schnittwinkel α und der dritte Schnittwinkel α größer als der erste Schnittwinkel γ und der Krümmungsradius R₁ mit 2mm≤ R₁≤ 6mm - insbesondere mit 3mm≤ R₁≤ 4mm - ausgebildet ist,
**dadurch gekennzeichnet, dass** an der Laufstreifenoberfläche der ersten Rillenwand (4) durch Anfasen eine Schrägfläche (8) an dem die Umfangsrille begrenzenden Profilelement (2) ausgebildet ist.

2. Laufflächenprofil nach Anspruch 1,
wobei die zweite Rillenwand (5) die Umfangsrille (1) zu der als zur Fahrzeugaußenseite (OU) hinweisend ausgebildeten Schulter und die erste Rillenwand (4) die Umfangsrille (1) zu der als zur Fahrzeuginnenseite (IN) hinweisend ausgebildeten Schulter hin begrenzt.

3. Laufflächenprofil nach Anspruch 1 oder 2,
wobei die Schrägfläche (8) höchstens bis auf eine Tiefe von 30% der Profiltiefe (PT) reicht.

4. Laufflächenprofil nach einem oder mehreren der vorangehenden Ansprüche,
wobei die Begrenzungskante (9) der Schrägfläche (8) an der Laufflächenperipherie (11) im Wesentlichen in Umfangsrichtung verlaufen.

5. Laufflächenprofil nach einem oder mehreren der vorangehenden Ansprüche,
wobei die Schrägfläche (8) einen Winkel ε zur axialen Richtung von 20° bis 70°, vorzugsweise von 45° einnimmt.

6. Laufflächenprofil eines Fahrzeugreifens nach einem oder mehreren der vorangegangenen Ansprüche,
wobei das Maß der radialen Erstreckung des radial äußeren Erstreckungsbereichs (7) der zweiten Rillenwand (5) mit h₁ und das Maß der radialen Erstreckung des radial inneren Erstreckungsbereichs () der zweiten Rillenwand (5) mit h₂ ausgebildet ist, wobei für das Verhältnis von h₂ zu h₁ gilt: 1≥(h₂/h₁)≥0,1, insbesondere 0,5≥(h₂/h₁)≥0,25.

7. Laufflächenprofil eines Fahrzeugreifens gemäß den Merkmalen von einem oder mehreren der vorangegangenen Ansprüche,
wobei der ersten Schnittwinkel γ mit 0°≤ γ≤ 20° - insbesondere mit 3°≤ γ ≤ 8°-der zweite Schnittwinkel β mit 30°≤ β ≤ 45° - insbesondere mit 38°≤ β ≤ 42°- und der dritte Schnittwinkel α mit 1°≤ α ≤ 25° - insbesondere mit 8°≤ α ≤ 15°-ausgebildet ist.

## Claims

1. Tread profile of a vehicle tyre with at least one circumferential groove (1), which is directed in the circumferential direction of the vehicle tyre, extends all the way round over the circumference of the vehicle tyre and, with two groove walls (4, 5), respectively delimits axially to both sides a profile element made to extend over the circumference of the vehicle tyre, the circumferential groove (1) being formed with a groove base (3) and the groove walls (4, 5), made to extend radially outwards from the groove base (3) on both sides of the groove base and delimiting the circumferential groove (1) in the axial direction, wherein, respectively in a sectional plane formed perpendicularly to the direction of extent of the groove base (3), the first groove wall (4) is formed along the direction of extent of the circumferential groove (1) such that it is made to slope away from the circumferential groove from the inside outwards in the radial sense with a first sectional angle γ in relation to the radial R in the tyre, and the second groove wall (5) is formed such that it is made to slope away from the circumferential groove from the inside outwards in the radial sense with a radially inner region of extent (6) with a second sectional angle β in relation to the radial R in the tyre and a radially outer region of extent (7) with a third sectional angle α in relation to the radial R in the tyre, and the transition (10) between the first groove wall (4) and the groove base (3) is formed with a radius of curvature R₁, the second sectional angle β being formed greater than the third sectional angle α and the third sectional angle α being formed greater than the first sectional angle γ and the radius of curvature R₁ being formed with 2 mm ≤ R₁ ≤ 6 mm - in particular with 3 mm ≤ R₁ ≤ 4 mm -, **characterized in that** a sloping face (8) is formed on the profile element (2) delimiting the circumferential groove by bevelling the surface of the tread strip of the first groove wall (4).

2. Tread profile according to Claim 1, the second groove wall (5) delimiting the circumferential groove (1) in relation to the shoulder formed pointing towards the outside of the vehicle (OU) and the first groove wall (4) delimiting the circumferential groove (1) in relation to the shoulder formed pointing towards the inside of the vehicle (IN).

3. Tread profile according to Claim 1 or 2, the sloping face (8) reaching at most to a depth of 30% of the profile depth (PT).

4. Tread profile according to one or more of the preceding claims, the delimiting edge (9) of the sloping face (8) running substantially in the circumferential direction at the periphery (11) of the tread.

5. Tread profile according to one or more of the preceding claims, the sloping face (8) assuming an angle ε in relation to the axial direction of 20° to 70°, preferably 45°.

6. Tread profile of a vehicle tyre according to one or more of the preceding claims, the degree of radial extent of the radially outer region of extent (7) of the second groove wall (5) being formed with h₁ and the degree of radial extent of the radially inner region of extent (6) of the second groove wall (5) being formed with h₂, the following applying for the ratio of h₂ to h₁: 1 ≥ (h₂/h₁) ≥ 0.1, in particular 0.5 ≥ (h₂/h₁) ≥ 0.25.

7. Tread profile of a vehicle tyre according to the features of one or more of the preceding claims, the first sectional angle γ being formed with 0° ≤ γ ≤ 20° - in particular with 3° ≤ γ ≤ 8°, the second sectional angle β being formed with 30° ≤ β ≤ 45° - in particular with 38° ≤ β ≤ 42° - and the third sectional angle α being formed with 1° ≤ α ≤ 25° - in particular with 8° ≤ α ≤ 15°.

## Revendications

1. Profil de surface de roulement pour bandage de roue de véhicule présentant au moins une rainure périphérique (1) orientée dans la direction périphérique du bandage de roue de véhicule, s'étendant sur la périphérie du bandage de roue de véhicule et délimitant axialement par deux parois de rainure (4, 5) un élément profilé qui s'étend axialement des deux côtés sur la périphérie du bandage de roue de véhicule,
la rainure périphérique (1) présentant un fond de rainure (3) et des parois de rainure (4, 5) qui s'étendent radialement vers l'extérieur à partir du fond (3) de la rainure sur les deux côtés du fond de la rainure et qui délimitent la rainure périphérique (1) dans la direction axiale,
depuis une position radialement intérieure jusqu'à une position radialement extérieure, la première paroi (4) de la rainure étant inclinée en s'éloignant de la rainure périphérique dans la direction d'extension de la rainure périphérique (1) et dans un plan de coupe perpendiculaire à la direction d'extension du fond (3) de la rainure sous un premier angle de coupe γ par rapport à la radiale R du bandage de roue,
depuis une position radialement intérieure jusqu'à une position radialement extérieure, la deuxième paroi (5) de la rainure étant inclinée par rapport à la rainure périphérique, une partie (6) s'étendant radialement à l'intérieur formant un deuxième angle de coupe β par rapport à la radiale R du bandage de roue et une partie (7) s'étendant radialement à l'extérieur formant un troisième angle de coupe α par rapport à la radiale R du bandage de roue,
la transition (10) entre la première paroi (4) de la rainure et le fond (3) de la rainure présentant un rayon de courbure R₁,
le deuxième angle de coupe β étant supérieur au troisième angle de coupe α et le troisième angle de coupe α étant supérieur au premier angle de coupe γ et le rayon de courbure R₁ vérifiant la relation 2 mm ≤ R₁ ≤ 6 mm et en particulier la relation 3 mm ≤ R₁ ≤ 4 mm, **caractérisé en ce que** sur la surface de la bande de roulement de la première paroi (4) de la rainure est réalisée par biseautage une surface oblique (8) sur l'élément profilé (2) délimitant la rainure périphérique.

2. Profil de surface de roulement selon la revendication 1, dans lequel la deuxième paroi (5) de la rainure délimite la rainure périphérique (1) en direction de l'épaulement tourné vers le côté extérieur (OU) du véhicule et la première paroi (4) de la rainure délimite la rainure périphérique (1) en direction de l'épaulement tourné vers le côté intérieur (IN) du véhicule.

3. Profil de surface de roulement selon la revendication 1 ou 2,
dans lequel la surface oblique (8) s'étend au maximum jusqu'à une profondeur de 30 % de la profondeur (PT) du profilé.

4. Profil de surface de roulement selon l'une quelconque ou plusieurs des revendications précédentes,
dans lequel l'arête de limitation (9) de la surface oblique (8) au niveau de la périphérie de la surface de roulement (11) s'étend sensiblement dans la direction périphérique.

5. Profil de surface de roulement selon l'une quelconque ou plusieurs des revendications précédentes,
dans lequel la surface oblique (8) forme un angle ε avec la direction axiale de 20° à 70°, de préférence de 45°.

6. Profil de surface de roulement pour bandage de roue de véhicule selon l'une ou plusieurs des revendications précédentes, dans lequel la dimension de l'extension radiale de la partie (7) de la deuxième paroi (5) de la rainure qui s'étend radialement vers l'extérieur est h₁ et la dimension de l'extension radiale de la partie (6) de la deuxième paroi (5) de la rainure qui s'étend radialement à l'intérieur est h₂, le rapport entre h₂ et h₁ étant défini par : 1 ≥ (h₂/h₁) ≥ 0,1 et en particulier 0,5 ≥ (h₂/h₁) ≥ 0,25.

7. Profil de surface de roulement pour bandage de roue de véhicule selon les caractéristiques d'une ou plusieurs des revendications précédentes, dans lequel le premier angle de coupe γ vérifie la relation 0° ≤ γ ≤ 20°, en particulier 3° ≤ γ ≤ 8°, le deuxième angle de coupe β vérifie la relation 30° ≤ β ≤ 45° et en particulier la relation 38° ≤ β ≤ 42° et le troisième angle de coupe α vérifie la relation 1° ≤ α ≤ 25° et en particulier la relation 8° ≤ α ≤ 15°.
